# EUROPEAN PATENT SPECIFICATION

(11) **EP 3 586 001 B1**
(45) Date of publication and mention of the grant of the patent: **24.02.2021**
(21) Application number: 18702082.1
(22) Date of filing: 09.01.2018
(51) Int. Cl.: F03D 80/50

(54) **PARKING ASSEMBLY**
EINPARKANORDNUNG
ENSEMBLE DE STATIONNEMENT

(30) Priority: 05.04.2017 DE 102017205807
(43) Date of publication of application: 01.01.2020
(73) Proprietor: Siemens Gamesa Renewable Energy A/S, 7330 Brande (DK)
(72) Inventor: ANDERSEN, Erik Dahl, 7480 Vildbjerg (DK); JENSEN, John Harry, 8765 Klovborg (DK)
(74) Representative: Aspacher, Karl-Georg
(86) International application number: PCT/EP2018/050416
(87) International publication number: WO 2018/184741

(56) References cited:
- DE-A1-102010 009 916
- KR-A- 20140 085 695
- US-A1- 2012 090 917
- US-A1- 2014 054 110

## Description

The invention describes a parking assembly realized to temporarily support a working platform of a wind turbine. The invention further describes a method of parking a working platform on such a parking assembly.

An offshore installation such as a wind turbine is constantly exposed to harsh wind and weather conditions. Generally, an offshore installation such as a wind turbine is installed on a support structure such as a monopile with a transition piece between the monopile and a tower of a wind turbine. The transition piece generally has a fixed platform to provide a safe landing zone and to enable access to the technical facilities of the wind turbine. During its lifetime, a wind turbine generally needs to be serviced, and technicians may need to access the blades and/or the tower from the outside. For service and maintenance of the tower and the blades, a working platform is generally transported to the wind turbine location where it is coupled to a lifting apparatus such as a crane, and lifted along the outside of the tower so that workers can access the rotor blades and the tower from the outside. An example of such a working platform is the service platform FFB360. Transporting the working platform to the wind turbine is a critical procedure due to challenging environmental conditions such as high winds, drift or waves. The working platform can be taken from a vessel and is directly installed to the tower of the wind turbine. In the known methods, the working platform can be dismantled and transferred to the vessel again at the end of the day or in case of poor weather conditions. This can lead to problems in case of severe weather conditions, and can be expensive. Generally, a working platform is required for days or even weeks at the same wind turbine. To avoid excessive vessel rental costs, a temporary parking platform can be installed on the transition piece of the wind turbine. The parking platform provides a safe landing zone for the working platform and the technicians/service personnel and allows the working platform to remain at the wind turbine in between maintenance operations. Another advantage of this approach is that the complex disassembly procedure of the working platform needs only to be performed once.

For the installation of the known types of parking platforms, special adaptors are required that have to be custom-designed for both the working platform and the transition piece. In addition, a railing or other parts of the transition piece may need to be dismantled and modified prior to the mounting of the parking platform. Generally, the production of custom-built adaptors for the variety of different transition pieces in conjunction with the necessary modifications of the transition piece are time-consuming processes that add to the overall maintenance costs of offshore wind turbines Examples of prior art solutions are available in documents US 2012/090917 A1, US 2014/054110 A1, CN1902398A and CN103477005A .

It is therefore an object of the invention to provide a parking platform for a working platform of an offshore installation that overcomes the problems discussed above.

This object is achieved by the parking assembly of claim 1 and by the method of claim 11 of parking a working platform of an offshore installation.

According to the invention, the parking assembly is realized to carry a working platform of an offshore installation. The inventive parking assembly comprises a supporting structure with a horizontal part arranged to receive the working platform; and a coupling arrangement realized to detachably secure the supporting structure to an upright element of an offshore installation, wherein the coupling arrangement comprises at least one strap realized to horizontally encircle the upright element. The horizontal part is realized to provide a temporary stand for a working platform on any type of offshore installation and moreover allows storage of such a platform over several weeks or months. The horizontal part is realized to protrude beyond an outer edge of the upright element, independent of the design or the construction features of the upright element. The coupling arrangement of the parking assembly is realized to detachably secure the parking assembly to an upright element of any offshore installation without any modifications to the upright element. The coupling arrangement is realized to horizontally encircle the upright element of the offshore installation.

An advantage of the inventive parking assembly is that the parking assembly is universally applicable to any type of offshore installation without modifications of the working platform or the offshore installation. The parking assembly can be used, for example, with transition pieces of offshore wind turbines with different designs and construction features. In addition, the coupling arrangement is realized to detachably secure the parking assembly to an upright element of an offshore installation without additional adaptors or fasteners.

The inventive parking assembly is suitable for different types and embodiments of service and maintenance platforms for blades and towers of wind turbines such as the FFB360 working platform mentioned above. Of course, the inventive parking assembly can be used for any kind of offshore installation, such as an electrical sub-station or an oil or gas drilling installation, which may use other kinds of working platforms.

According to the invention, the method of parking a working platform of an offshore installation comprises the steps of temporarily securing such a parking assembly to an upright element of an offshore installation; lowering the working platform to the supporting structure of the parking assembly; and detachably securing the working platform to the supporting structure of the parking assembly.

An advantage of this inventive method is that the parking assembly can be secured relatively easily to the upright element, without any time-consuming dismantling of components such as the railing of a transition piece. Furthermore, as mentioned above the inventive method can be used with different types and embodiments of working platforms. In this way, the inventive method can significantly reduce the overall maintenance costs of offshore installations.

Particularly advantageous embodiments and features of the invention are given by the dependent claims, as revealed in the following description. Features of different claim categories may be combined as appropriate to give further embodiments not described herein.

As mentioned above, the inventive parking assembly can be used with any kind of offshore installation. In the following, without restricting the invention in any way, it may be assumed that the offshore installation is an offshore wind turbine, for which the upright element is the tower that supports a nacelle.

The supporting structure of the inventive parking assembly comprises all means that realize the temporary support of the working platform of the wind turbine and may also comprise further parts that facilitate the installation and/or the deinstallation of the parking assembly or the working platform. The supporting structure is preferably realized so that the horizontal part protrudes beyond the railing of the transition piece, whose height is typically in the range of 150 centimetres or more.

In the following, the terms "parking assembly" and "parking platform" may be regarded as synonyms and may be used interchangeably.

In a preferred embodiment of the inventive parking assembly, a strap of the coupling arrangement comprises an elastic material. For example, a strap can be made of an elastic material, which material may be woven in the form of a flat band or twisted in the form of a rope. The length of a strap can be chosen according to the diameter of the tower of the wind turbine. Preferably, the length of a strap is sufficient to encircle a tower with a circumference of 15 meters or more. The diameter and the breaking strength of a strap can be chosen according to the expected load stress of the working platform. For example, the diameter of a strap may be 18 to 23 millimetres. The breaking strength of a strap is preferably 27 metric tons or more.

In a preferred embodiment of the invention, the coupling arrangement comprises two straps for the attachment of the parking assembly to the tower. These are preferably made of different materials. For example, a first strap can comprise an elastic material as described above, while a second strap can be made of a steel rope. Generally, each strap is realized to secure the parking assembly to the tower on its own, whereby an additional strap may be regarded as a kind of "backup" or "safety" strap. Additional straps might be attached to the coupling arrangement serving as safety precautions.

In a preferred embodiment of the invention, a strap of the coupling arrangement comprises steel, for example, a rope made of twisted or woven steel wires. Most preferably, such a steel wire rope has a protective cover made of plastic, rubber or any other suitable material to protect an outer surface of the tower from damage when in contact with the steel wire rope. The diameter of a protected steel wire rope can be in the region of 18 millimetres to achieve a breaking strength of 24 metric tons or more. The dimensions of the protected steel wire rope are preferably chosen to achieve a safety factor of 7 or more. Preferably, a protected steel wire rope is chosen to have a working load limit in the region of 3.2 metric tons.

In a particularly preferred embodiment of the invention, the coupling arrangement comprises two straps, namely an elastic strap as well as a protected steel wire rope, for securing the parking assembly to the tower.

In a further embodiment of the inventive parking assembly, a strap can comprise any rope-like element that can encircle the tower of the wind turbine. This includes different types of elastic and inelastic straps, ropes, belts etc. made from any suitable fibres, as well as steel cables, chains etc.

The coupling arrangement of the inventive parking assembly comprises a number of fixing points, wherein a strap is attached at each of its two ends to a fixing point of the coupling arrangement. Both ends of a strap might be attached to the same fixing point of the coupling arrangement. Alternatively, a strap can be attached at each end to a separate fixing point of the coupling arrangement. When two or more straps are used, their endpoints can each be attached to separate fixing points of the coupling arrangement. In other words, this embodiment of the inventive coupling arrangement will comprise four individual fixing points for the attachment of two straps. In a preferred embodiment of the invention, a strap can be secured at its fixing points by an arrangement of bolts and/or retaining pins to prevent unwanted detachment.

The horizontal and vertical positions of the fixing points on the supporting structure can depend on the type and the number of straps that will be used and on the structure of the offshore installation. For example, the height of the fixing points on the supporting structure relative to the transition piece can depend on the height of a railing of the transition piece. The number of fixing points can be increased as required, if additional straps are to be used in the parking assembly. For example, additional fixing points can be welded to the supporting structure as required.

Preferably, a strap of the inventive parking assembly encircles the tower in an essentially horizontal manner. When two or more straps are used, these can encircle the tower in a parallel manner. Alternatively, the straps may overlap. In a further embodiment of the invention, the straps might encircle the tower at a specific angle to each other. The fixing points of the coupling arrangement may be placed so that the straps keep the area of a tower entrance door clear.

For the attachment of the inventive parking assembly to an upright element of an offshore installation such as a tower of a wind turbine, the coupling arrangement comprises a tensioning means realized to tighten a strap encircling the tower. Preferably, the tensioning means of the coupling arrangement comprises any of a winch system and/or a turnbuckle and/or a pulley and/or a ratchet. These are devices that facilitate the attachment of a strap to the parking assembly and/or the tightening of a strap around the tower. In a preferred embodiment of the invention, any such device is situated adjacent to the fixing points of the coupling arrangement. A winch system and/or a turnbuckle and/or a pulley and/or a ratchet for tensioning a strap is preferably integrated in a fixing point.

In a particularly preferred embodiment of the invention, at least one fixing point of the coupling arrangement comprises a winch, a pulley and a rigging screw in the form of a turnbuckle as technical devices for the attachment of an elastic strap. Equally, at least one fixing point of the coupling arrangement comprises a turnbuckle for the attachment of a protected steel wire rope.

Generally one main strap would be sufficient for the attachment of the parking assembly and the working platform such as the FFB360 to the tower. However, the working platform may be larger than common working platforms such as the FFB360 in size and/or weight. Therefore in a preferred embodiment of the invention, the coupling arrangement comprises one or more additional straps and/or wires, so that additional safety measures can be provided should the main strap fail. The additional straps and/or wires can be attached to individual or shared fixing points on the supporting structure.

In a preferred embodiment of the invention, the supporting structure comprises at least one contact surface arranged to lie against an outer surface of an upright element such as the tower. The shape of the contact surface is preferably chosen to maximize the contact between the supporting structure and the outer surface of a tower wall. The surface area of the contact surface is preferably large enough to achieve a favourable friction contact. When used with offshore wind turbines, the contact surface preferably comprises a curved surface to match the curvature of a tower outer surface. In a further embodiment of the invention, the curvature of the contact surface may be adjustable to the curvatures of different towers. For example, the contact surface can be equipped with a foam mat that will adjust to the curved surface of towers with different diameters. In an alternative embodiment of the invention, the surface of the contact surface can be straight. Such a realization may be suitable for use with an offshore installation such as an oil rig. Equally, a number of flat contact surfaces can be arranged to lie against the tower of a wind turbine.

The supporting structure of the inventive parking assembly comprises a vertical part arranged to extend downward from the horizontal part of the supporting structure to a lower level of the offshore installation, such as the transition piece. The vertical part of the supporting structure might comprise a curvature to match the curvature of a tower outer surface. In an alternative embodiment of the invention, the surface of the vertical part facing the tower may be straight.

In a preferred embodiment of the invention, the vertical part can comprise at least two, preferably four rectangular contact surfaces. These can be arranged pairwise in a two-by-two arrangement. The surfaces of such contact surfaces can be covered by neoprene or any suitable elastic protective coating to increase the friction between the contact surface and the tower wall. Such protective coating also protects the tower wall from damage by the supporting structure.

In a preferred embodiment of the inventive parking assembly, the vertical part is essentially perpendicular to the horizontal part. For example, the vertical part and the horizontal part can be joined in an L-shape, whereby an inner end of the horizontal part ends flush with the top end of the vertical part. Equally, the vertical part and the horizontal part can be joined in a T-shape fashion.

The vertical part of the inventive parking assembly extends between the horizontal part and the transition piece, when the parking assembly is installed at an offshore wind turbine. Preferably, the vertical part comprises at least one foot or similar arranged to rest on the lower level of the offshore installation, e.g. on the transition piece of a wind turbine.

In a preferred embodiment of the invention, a foot element is provided at the base of the vertical part of an L-shaped supporting structure to rest on the transition piece in close proximity to the tower wall. A foot preferably comprises a flat base plate which can be coated with neoprene or any material with comparable properties to achieve a favourable friction contact between the supporting structure and the transition piece.

In a preferred embodiment of the invention, the height of the vertical part can be adjusted by providing one or more height adjustable feet. In this way, the height of the vertical part can be adjusted, to adapt to the height of the transition piece railing.

In a further preferred embodiment of the invention, a foot can be realized in the form of a curved element at the base of the vertical part. A downwardly curving foot will have a single contact surface of a suitable size resting on the transition piece. Equally, this type of foot can be realized to deform by the weight of the parking assembly so that its contact surface with the transition piece is increased.

In a further embodiment of the invention, the vertical part of the supporting structure is preferably realized to comprise at least two legs. For example, two legs may be arranged to rest on the transition piece in close proximity to the tower. Since the supporting structure is secured to the tower by the coupling arrangement, the legs of the vertical part are mainly required to achieve the desired height of the horizontal part. One or more further legs may be arranged to rest near the outer edge of the transition piece. The height of the legs (and optionally their horizontal position on the transition piece) may be individually adjustable.

In a preferred embodiment of the invention, the parking assembly comprises one or more ladders to provide access between the lower level or "ground level" (e.g. the transition piece) and the working platform resting on the supporting structure. The ladders can be realized in any suitable manner and can be hooked or bolted to the parking assembly and/or the working platform. In a preferred embodiment of the invention, such ladders can be dismantled or detached from the parking assembly to prevent damage of the transition piece during installation of the parking assembly. A ladder might be height-adjustable and may comprise levelling feet and an anti-slip coating of the rungs.

In a preferred embodiment of the parking assembly, the supporting structure comprises a centering arrangement realized to assist in correctly positioning the working platform on the parking assembly. The centering arrangement might comprise one or more finger-shaped components that are mounted at a suitable angle to the horizontal part and that extend upward from the horizontal part. In a preferred embodiment of the invention, the centering arrangement comprises a number of finger-shaped components along the edges, realized in a 45° and/or 90° angle upward and outward from the horizontal part.

In a preferred embodiment of the invention, the parking assembly can comprise at least one magnet to assist in positioning the parking assembly during installation. Such a magnet may be arranged to face a steel tower of a wind turbine and may be realized as a permanent magnet or an electromagnet. In a preferred embodiment of the invention, the parking assembly comprises two permanent magnets, each with a suitable lifting strength e.g. 0.6 metric tons. Such magnets may serve to temporarily "anchor" the parking assembly to the tower while workers arrange the straps in place.

To lift the parking assembly on or off the transition piece, the supporting structure comprises a number of attachment points arranged for attaching the parking assembly to cables or wires of a crane or other lifting apparatus and/or to the working platform and/or to a tag line. A number of attachment points are realized to attach the parking assembly to a lifting apparatus such as a crane which can be installed on a marine vessel, on the transition piece or in a nacelle of a wind turbine tower. Other attachment points can serve to secure the parking assembly to taglines and/or guiding ropes. Further attachment points may serve to lash the working platform to the parking assembly. Attachment points can be provided as suitable sized eyelets, for example, or may be formed as openings in the framework of the supporting structure.

In a preferred embodiment of the invention, the sides of the horizontal part can comprise four attachment points for cables or wires of a crane; two on each of two lateral sides. The supporting structure could comprise up to six attachment points for guiding ropes or taglines. In addition, preferably six attachment points for lashing the working platform to the parking assembly may be provided on the supporting structure.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Fig. 1 shows a first embodiment of the inventive parking assembly;
Fig. 2 shows a vertical section of the embodiment of Fig.1;
Fig. 3 shows a top view of the embodiment of Fig. 1;
Figs. 4-9 show details of the coupling arrangement of the parking assembly of Fig. 1;
Fig. 10 shows the parking assembly of Fig. 1 attached to a tower of a wind turbine;
Fig. 11 shows a further embodiment of the inventive parking assembly;
Fig. 12 shows a vertical section of the embodiment of Fig. 11.

In the diagrams, like numbers refer to like objects throughout. Objects in the diagrams are not necessarily drawn to scale.

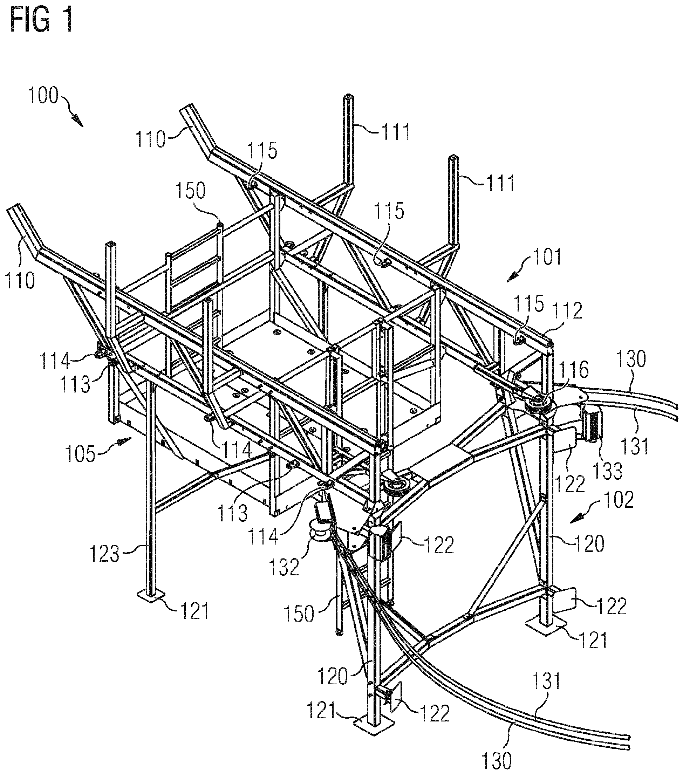

Fig. 1 shows an embodiment of the inventive parking assembly 100 and shows a horizontal part 101 arranged to receive a working platform, a vertical part 102 shaped to lie against an upright element of an offshore installation, and a coupling arrangement adapted to detachably couple the parking assembly 100 to the upright element of the offshore installation. In this exemplary embodiment, the horizontal part 101 is realized as a framework of girders and struts. Here, the horizontal part 101 comprises a centering arrangement 110, 111 in form of two diagonal centering fingers 110. In addition, the horizontal part 101 comprises four vertical centering fingers 111. The centering arrangement 110, 111 assists in arranging the working platform on the horizontal part 101. A rubber fender 112 ensures a firm stand of the working platform. To lift the parking assembly 100 into place at the offshore installation, each side of the horizontal part 101 comprises two attachment points 113 for cables of a lifting apparatus such as a crane. In addition, each side of the horizontal part 101 comprises three attachment points 114 for a tagline or a guiding rope, which tagline can be used to stabilize the parking assembly 100 during installation. In this exemplary embodiment, each side of the horizontal part 101 further comprises three attachment points 115 to allow the working platform to be lashed to the parking assembly 100.

In this exemplary embodiment, the horizontal part 101 and the vertical part 102 of the parking assembly 100 are realized in an L-shape. The vertical part 102 extends between the horizontal part 101 and the lower level of the offshore installation by means of two inner legs 120. Each inner leg 120 terminates in a foot plate 121 arranged to rest on the lower level of the offshore installation such as the transition piece of a wind turbine.

In this exemplary embodiment, the framework of the vertical part 102 is curved, to match the curvature of an outer surface of a wind turbine tower. In addition, the vertical part 102 comprises four contact surfaces 122, which are shaped to lie against the outer surface of the tower. The contact surfaces 122 are provided in a vertical arrangement on the inner legs 120 and can match the curvature of essentially any wind turbine tower. For adjusting the position of the parking assembly 100 around the tower during installation, two horizontally adjustable wheels 116 are provided. Once the parking assembly 100 is in place, the wheels 116 can be retracted. Two further support legs 123 provide a safe and horizontal stand of the parking assembly 100 when not in use, e.g. on a vessel.

The detachable coupling of the parking assembly 100 to the tower is realized by the coupling arrangement. In this exemplary embodiment, fixing points of the coupling arrangement are connected to the parking assembly 100 at two different positions on the vertical part 102. In this exemplary embodiment, the coupling arrangement will comprise an elastic strap 130 and a protected steel wire rope 131 to horizontally encircle the tower. At one side of the vertical part 102, the coupling arrangement additionally comprises a winch 132 which will be used to tighten a strap. In this exemplary embodiment, the coupling arrangement also comprises two magnets 133 arranged to face the upright element. For access between the lower level of the offshore installation and the working platform resting on the horizontal part 101, the parking assembly 100 of this exemplary embodiment comprises an intermediate platform 105 and a number of ladders 150.

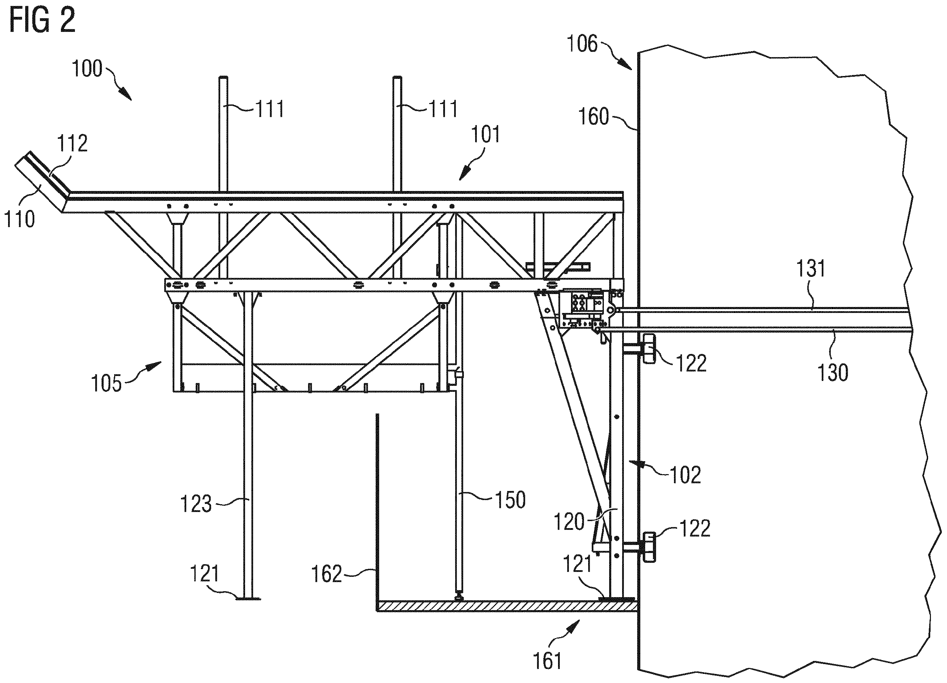

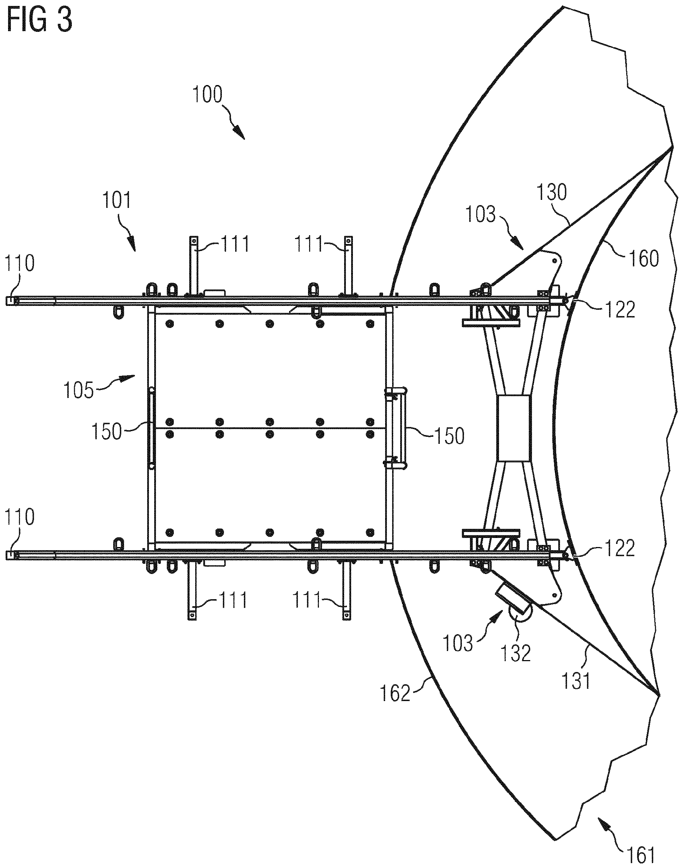

Fig. 2 and Fig. 3 show a vertical section and a top view respectively of the parking assembly 100 of Fig. 1 attached to the tower 160 of a wind turbine 106. The vertical part 102 with its contact surfaces 122 is shaped to lie against the outer surface of the tower 160. The contact surfaces 122 essentially serve as spacers between the vertical part 102 and the tower 160 of the wind turbine 106. The horizontal part 101 and the vertical part 102 are joined in an L-shape, while the horizontal part 101 protrudes beyond the railing 162 of a transition piece 161 of the wind turbine 106. In this way, the intermediate platform 105 extends beyond the railing 162 of the transition piece 161 with a clearance determined by the height of the vertical part 102.

In a preferred embodiment of the parking assembly 100, the vertical distance between the horizontal part 101 and the transition piece 161 is adjustable. Depending on the height of the transition piece railing 162 and the design of the transition piece 161, the height of the inner legs 120 can be adjustable, to maintain a clearance between the horizontal part 101 and the transition piece railing 162, when the parking assembly 100 is installed. Levelling feet of a ladder 150 can be adjusted to facilitate access from the transition piece 161 to the working platform. In this exemplary embodiment, the coupling arrangement 103 comprises an elastic strap 130 and a protected steel wire rope 131 encircling the tower 160. At one side of the vertical part 102 the coupling arrangement 103 also comprises a winch 132 to assist in tensioning a strap 130.

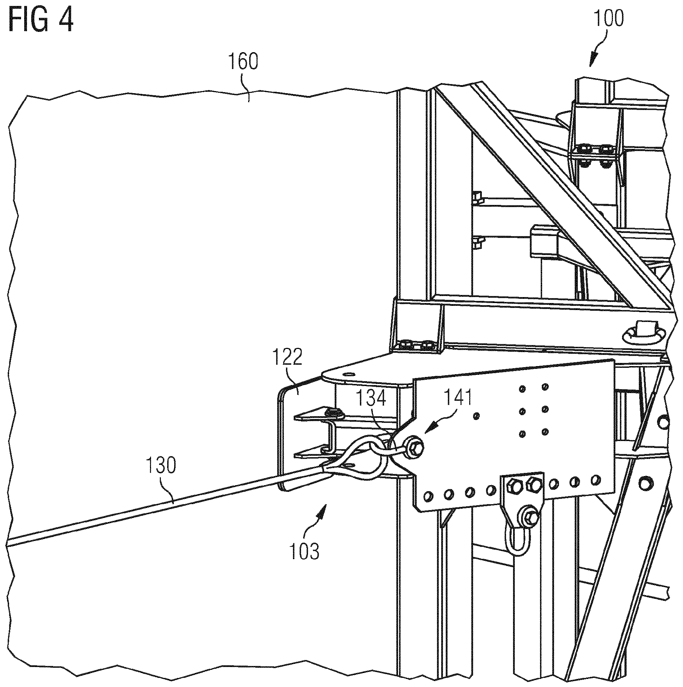

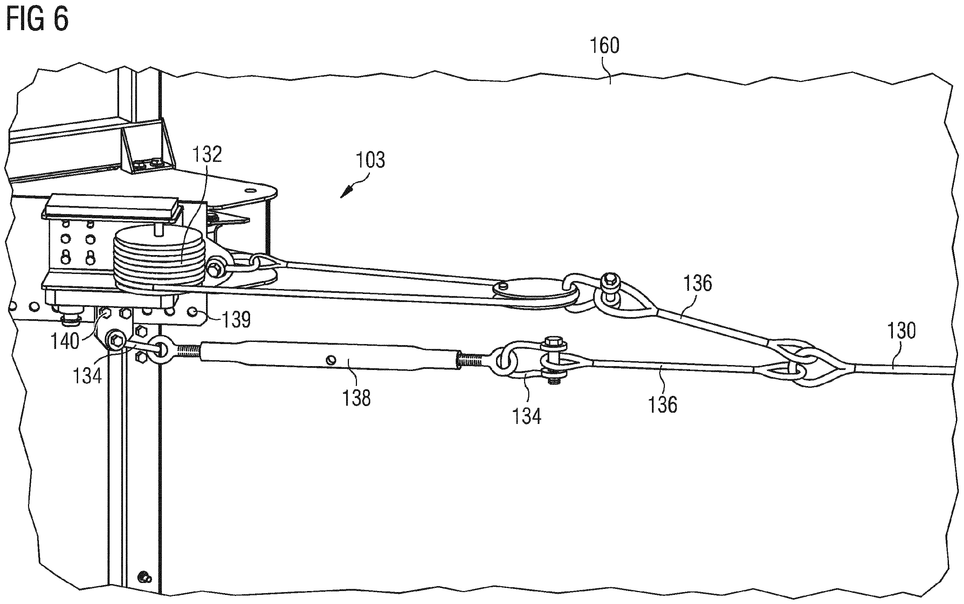

Fig. 4 to Fig. 9 show details of the coupling arrangement 103 during different stages of the coupling process of the parking assembly 100 to the tower 160. Once the parking assembly 100 is placed on the transition piece by a suitable lifting apparatus, the foot element of the vertical part preferably rests on the transition piece platform (not shown), while the contact surfaces 122 make contact with the outer surface of the tower 160 as shown in Fig. 4. The parking assembly 100 remains attached to the lifting apparatus for the entirety of the coupling procedure.

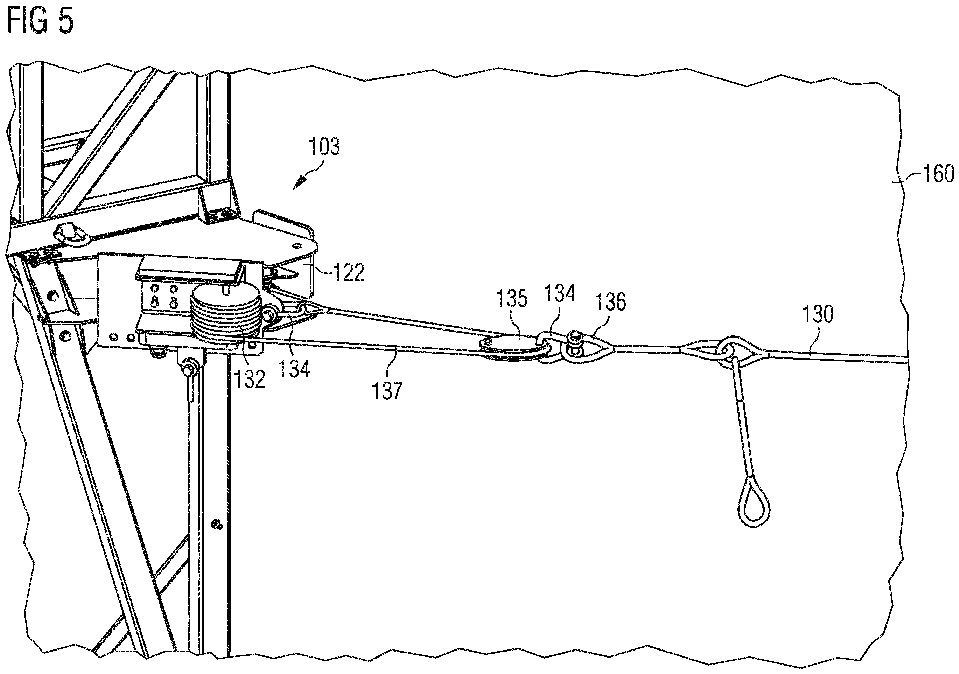

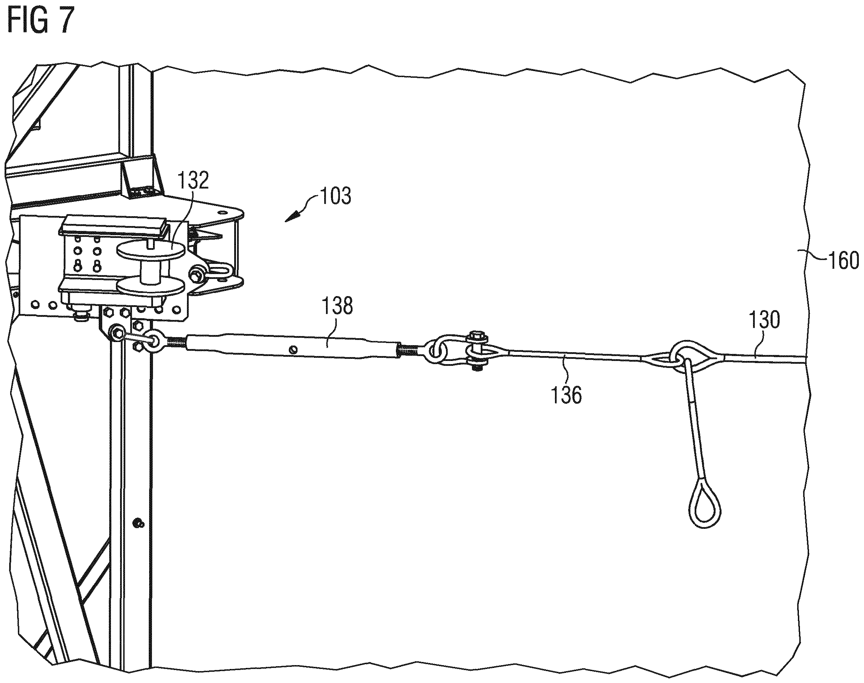

At the beginning of the coupling procedure, the elastic strap 130 is attached to a specific fixing point 141 of the coupling arrangement 103 without a winch, using a shackle 134 (Fig. 4). The elastic strap 130 encircles the tower 160 and is connected to the coupling arrangement 103 comprising a winch 132 at the opposite side of the vertical part (Fig. 5). The elastic strap 130 is connected to a pulley 135 of the winch 132 by a sling 136 and a shackle 134. The rope 137 of the winch 132 is attached to the coupling arrangement 103 by a shackle 134. Once the elastic strap 130 is tightened by operating the winch 132, a turnbuckle 138 is attached to a suitable assembly hole 139 of the coupling arrangement 103 using a shackle 134. The turnbuckle 138 is secured at one end to the vertical part 102 using special bolts 140 or retaining pins. The elastic strap 130 is connected to the other end of the turnbuckle 138 by a second sling 136 and a shackle 134. Once the elastic strap 130 is firmly tightened by the winch 132 and the turnbuckle 138, the winch 132 is disconnected as shown in Fig. 7. The elastic strap 130 is now in place around the tower 160 and holds the supporting structure in place.

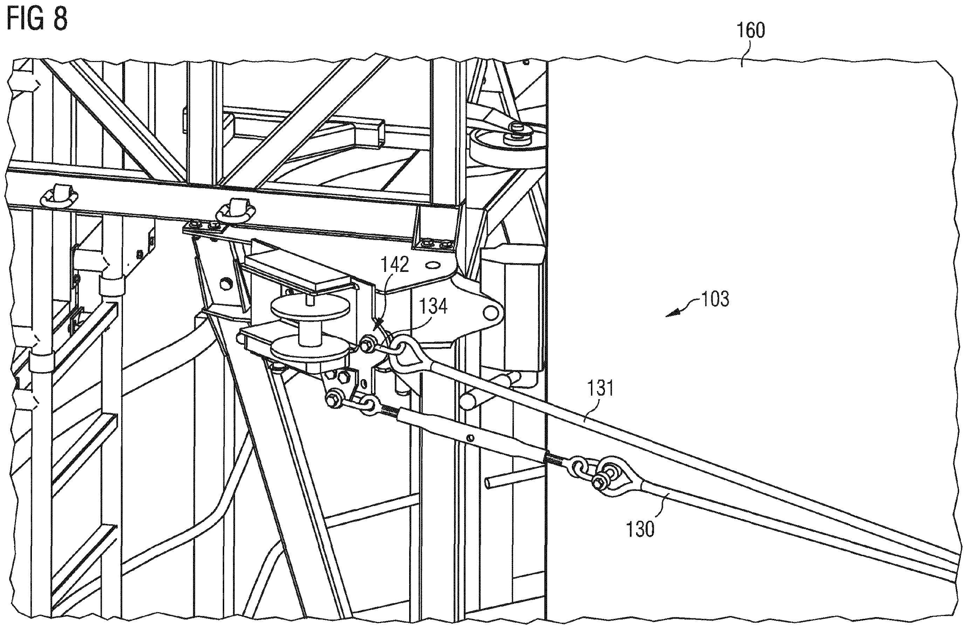

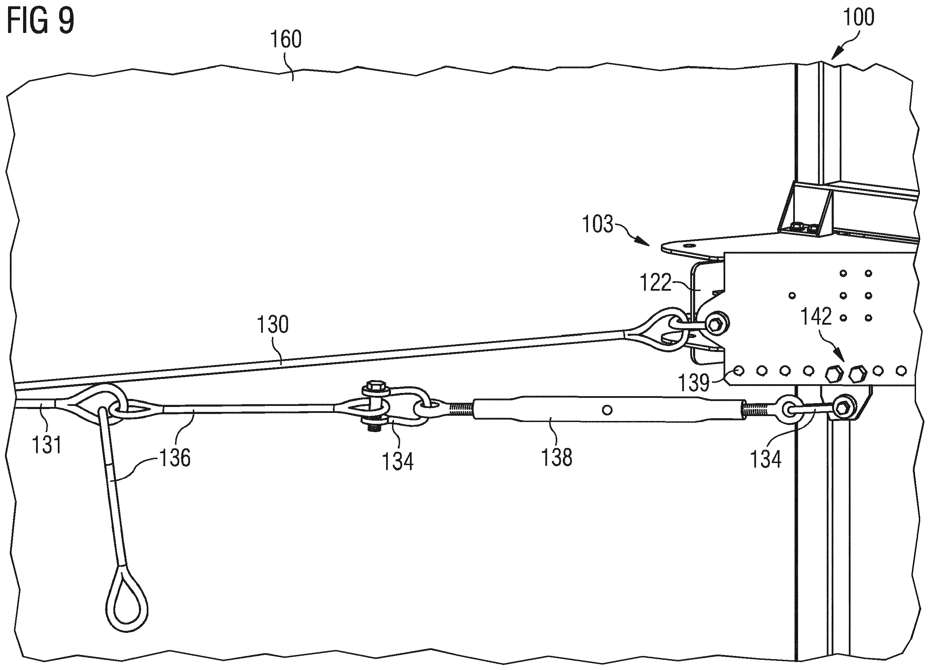

Fig. 8 shows an initial step in coupling a protected steel wire rope 131 to a specific fixing point 142 of the coupling arrangement 103 using a shackle 134. The elastic strap 130 is already in place as described above. The protected steel wire rope 131 is arranged to encircle the tower 160 and is attached to another turnbuckle 138 by a sling 136 and a shackle 134 (Fig. 9). The turnbuckle 138 is attached to a specific coupling point 142 of the coupling arrangement 103, which can be adjusted according to the assembly holes 139. Once the turnbuckle 138 of the protected steel wire rope 131 is tightened, the parking assembly 100 is fully secured.

In one embodiment of the invention, the elastic strap and the protected steel wire rope can be attached to the coupling arrangement in such a manner to cross one another. At each side of the vertical part, one strap is directly attached to the fixing point of the coupling arrangement by a shackle, while the other strap is attached to a turnbuckle.

After securing the parking assembly to the upright element of the offshore installation, the parking assembly is disconnected from the lifting apparatus and prepared to receive the working platform which is lowered to the parking assembly by a suitable lifting apparatus such as a crane.

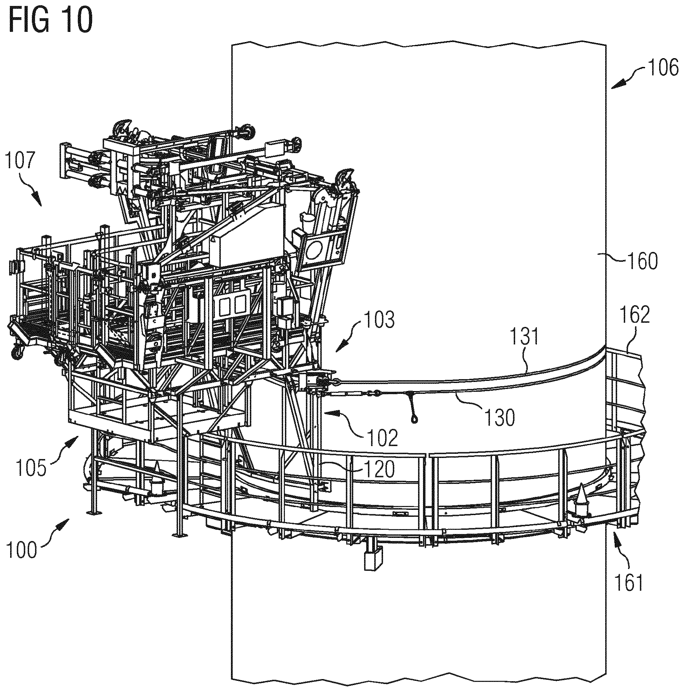

Fig. 10 shows a preferred embodiment of the inventive parking assembly 100 attached to the tower 160 of a wind turbine 106 with the working platform 107 resting on the horizontal part. The vertical part 102 lies against the wall of the tower 160 and rests on the transition piece 161 with two legs 120. The horizontal part and likewise the intermediate platform 105 protrude beyond the transition piece railing 162. The parking assembly 100 is detachably coupled to the tower 160 by an elastic strap 130 and a protected steel wire rope 131 encircling the tower 160. The working platform 107 can be lifted up along the tower 160 by a crane installed on the level of a nacelle of a wind turbine 106 when in use. When not in use, the working platform 107 can be lashed to the parking assembly 100.

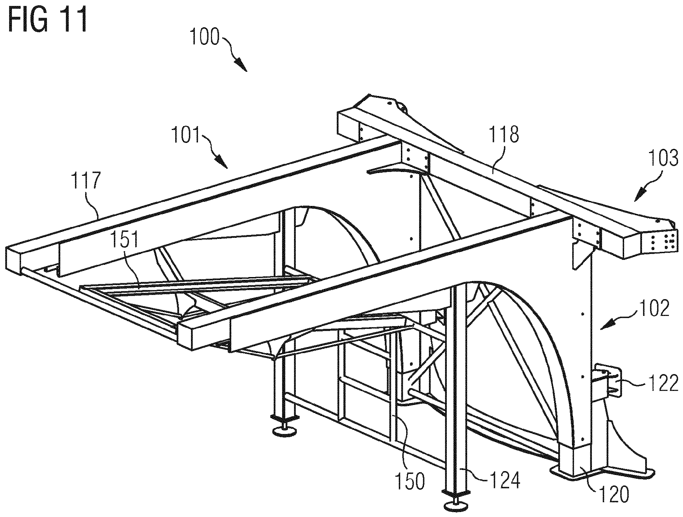

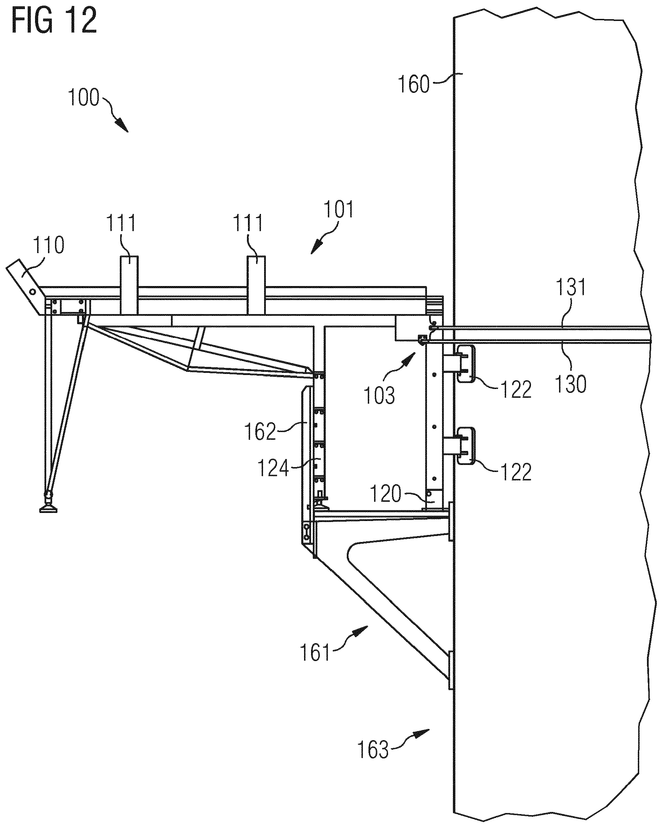

Fig. 11 and 12 show a further embodiment of the inventive parking assembly 100. This embodiment is featured by a more solid construction. The horizontal part 101 is realized by two parallel horizontal girders 117 and a crossbeam 118. The vertical part 102 is shaped to lie against the tower of a wind turbine (Fig. 11). The inner legs 120 are stabilized by brackets and cross struts. In this embodiment the parking assembly 100 comprises two outer legs 124. Access from the transition piece to the working platform is realized by a ladder 150 and a guide rail 151. The vertical part 102 and the horizontal part 101 of the parking assembly 100 can comprise additional claddings. Fig 12 shows a vertical section of this embodiment of the parking assembly 100 attached to the wind turbine tower 160. The inner legs 120 of the vertical part rest on the transition piece 161 in close proximity to the tower 160, while the outer legs 124 are situated near the railing 162 of the transition piece 161 which is resting on a monopile 163. Here, the legs 120, 124 are adjustable in height and in their horizontal position to match different designs of transition pieces 161 and transition piece railings 162.

## Claims

1. A parking assembly (100) configured to temporarily support a working platform (107) of an offshore installation (106), which parking assembly (100) comprises
- a supporting structure (101, 102) with a horizontal part(101) arranged to receive the working platform (107); and
- a coupling arrangement (103) realized to detachably secure the supporting structure (101, 102) to an upright element (160) of the offshore installation (106),
**characterized in that**
the coupling arrangement (103) comprises at least one strap (130, 131) realized to horizontally encircle the upright element (160);
wherein the vertical part (102) comprises at least one foot (121) arranged to rest on the transition piece (161);
the supporting structure (101, 102) comprises a vertical part (102) arranged to extend downward from the horizontal part (101) of the supporting structure (101, 102) to a lower level of the offshore installation (106);
wherein the vertical part (102) is perpendicular to the horizontal part (101);
wherein the offshore installation (106) is a wind turbine (106) and wherein the vertical part (102) extends between the horizontal part (101) and a transition piece (161) of the offshore wind turbine (106); and
wherein the vertical part (102) comprises at least one foot (121) arranged to rest on the transition piece (161).

2. A parking assembly according to claim 1, wherein a strap (130, 131) of the coupling arrangement (103) comprises an elastic material and/or steel.

3. A parking assembly according any of the preceding claims, wherein the coupling arrangement (103) comprises a number of fixing points (141, 142) and wherein a strap (130, 131) is attached at each end to a fixing point (141, 142) of the coupling arrangement (103).

4. A parking assembly according to any of the preceding claims, wherein the supporting structure (101, 102) comprises at least one contact surface (122) arranged to lie against an outer surface of the upright element (160).

5. A parking assembly according to any of the preceding claims, comprising one or more ladders (150) to provide access between the lower level of the offshore installation (106) and the working platform (107) resting on the supporting structure (101, 102).

6. A parking assembly according to any of the preceding claims, wherein the supporting structure (101, 102) comprises a centering arrangement (110, 111) realized to assist in arranging the working platform (107) on the parking assembly (100).

7. A parking assembly according to any of the preceding claims, wherein the coupling arrangement (103) comprises a tensioning means (132, 135, 138) realized to tighten a strap (130, 131) encircling the upright element (160) of the offshore installation (106).

8. A parking assembly according to claim 7, wherein the tensioning means of the coupling arrangement (103) comprises any of a winch system (132) and/or a turnbuckle (138) and/or a pulley (135) and/or a ratchet.

9. A parking assembly according to any of the preceding claims, wherein the coupling arrangement (103) comprises at least one magnet (133) arranged to engage with a magnetic upright element (160) of the offshore installation (106).

10. A parking assembly according to any of the preceding claims, wherein the supporting structure (101, 102) comprises a number of attachment points (113, 114, 115) arranged for attaching the parking assembly (100) to a lifting apparatus and/or to a tag line and/or to the working platform (107).

11. A method of parking a working platform (107) of an offshore installation (106), comprising the steps of
- temporarily securing a parking assembly (100) according to any of claims 1 to 10 to an upright element (160) of an offshore installation (106); and
- lowering the working platform (107) to the supporting structure (101, 102) of the parking assembly (100); and
- detachably securing the working platform (107) to the supporting structure (101, 102) of the parking assembly (100).

## Patentansprüche

1. Abstellanordnung (100), die so konfiguriert ist, dass sie vorübergehend eine Arbeitsplattform (107) einer Offshore-Anlage (106) halten kann, wobei die Abstellanordnung (100) Folgendes umfasst:
- eine Haltekonstruktion (101, 102) mit einem horizontalen Teil (101), der so angeordnet ist, dass er die Arbeitsplattform (107) aufnimmt, und
- eine Verbindungsbaugruppe (103), die so ausgelegt ist, dass sie die Haltekonstruktion (101, 102) lösbar an einem aufrechten Element (160) der Offshore-Anlage (106) sichert,
**dadurch gekennzeichnet, dass**
die Verbindungsbaugruppe (103) mindestens ein Band (130, 131) umfasst, das so ausgelegt ist, dass es das aufrechte Element (160) horizontal umgibt,
wobei der vertikale Teil (102) mindestens einen Fuß (121) umfasst, der so angeordnet ist, dass er auf dem Übergangsstück (161) aufliegt,
die Haltekonstruktion (101, 102) einen vertikalen Teil (102) umfasst, der so angeordnet ist, dass er sich von dem horizontalen Teil (101) der Haltekonstruktion (101, 102) nach unten zu einer unteren Ebene der Offshore-Anlage (106) erstreckt,
wobei der vertikale Teil (102) senkrecht zu dem horizontalen Teil (101) verläuft,
wobei es sich bei der Offshore-Anlage (106) um eine Windenergieanlage (106) handelt und sich der vertikale Teil (102) zwischen dem horizontalen Teil (101) und einem Übergangsstück (161) der Offshore-Windenergieanlage (106) erstreckt und
wobei der vertikale Teil (102) mindestens einen Fuß (121) umfasst, der so angeordnet ist, dass er auf dem Übergangsstück (161) aufliegt.

2. Abstellanordnung nach Anspruch 1, wobei ein Band (130, 131) der Verbindungsbaugruppe (103) ein elastisches Material und/oder Stahl umfasst.

3. Abstellanordnung nach einem der vorherigen Ansprüche, wobei die Verbindungsbaugruppe (103) eine Anzahl Fixierpunkte (141, 142) umfasst und ein Band (130, 131) an jedem Ende an einem Fixierpunkt (141, 142) der Verbindungsbaugruppe (103) angebracht ist.

4. Abstellanordnung nach einem der vorherigen Ansprüche, wobei die Haltekonstruktion (101, 102) mindestens eine Kontaktfläche (122) umfasst, die so angeordnet ist, dass sie an einer Außenfläche des aufrechten Elements (160) anliegt.

5. Abstellanordnung nach einem der vorherigen Ansprüche, die eine oder mehrere Leitern (150) umfasst, die für eine Verbindung zwischen der unteren Ebene der Offshore-Anlage (106) und der auf der Haltekonstruktion (101, 102) aufliegenden Arbeitsplattform (107) sorgen.

6. Abstellanordnung nach einem der vorherigen Ansprüche, wobei die Haltekonstruktion (101, 102) eine Zentrierbaugruppe (110, 111) umfasst, die so ausgelegt ist, dass sie beim Anordnen der Arbeitsplattform (107) auf der Abstellanordnung (100) hilft.

7. Abstellanordnung nach einem der vorherigen Ansprüche, wobei die Verbindungsbaugruppe (103) ein Spannmittel (132, 135, 138) umfasst, das so ausgelegt ist, dass es ein Band (130, 131) festzieht, welches das aufrechte Element (160) der Offshore-Anlage (106) umgibt.

8. Abstellanordnung nach Anspruch 7, wobei das Spannmittel der Verbindungsbaugruppe (103) ein Windensystem (132) und/oder ein Spannschloss (138) und/oder eine Rolle (135) und/oder eine Sperrklinke umfasst.

9. Abstellanordnung nach einem der vorherigen Ansprüche, wobei die Verbindungsbaugruppe (103) mindestens einen Magneten (133) umfasst, der so angeordnet ist, dass er an einem aufrechten Magnetelement (160) der Offshore-Anlage (106) anliegt.

10. Abstellanordnung nach einem der vorherigen Ansprüche, wobei die Haltekonstruktion (101, 102) eine Anzahl Befestigungspunkte (113, 114, 115) umfasst, die zum Befestigen der Abstellanordnung (100) an einer Hubvorrichtung und/oder einem Leitseil und/oder der Arbeitsplattform (107) angeordnet sind.

11. Verfahren zum Abstellen einer Arbeitsplattform (107) einer Offshore-Anlage (106), das folgende Schritte umfasst:
- vorübergehendes Sichern einer Abstellanordnung (100) nach einem der Ansprüche 1 bis 10 an einem aufrechten Element (160) einer Offshore-Anlage (106) und
- Absenken der Arbeitsplattform (107) auf die Haltekonstruktion (101, 102) der Abstellanordnung (100) und
- lösbares Sichern der Arbeitsplattform (107) an der Haltekonstruktion (101, 102) der Abstellanordnung (100).

## Revendications

1. Ensemble de stationnement (100) configuré pour supporter temporairement une plate-forme de travail (107) d'une installation en mer (106), lequel ensemble de stationnement (100) comprend
- une structure de support (101, 102) ayant une partie horizontale (101) agencée pour recevoir la plate-forme de travail (107) ; et
- un agencement de couplage (103) réalisé pour arrimer de manière détachable la structure de support (101, 102) à un élément montant (160) de l'installation en mer (106),
**caractérisé en ce que**
l'agencement de couplage (103) comprend au moins une sangle (130, 131) réalisée pour encercler horizontalement l'élément montant (160) ;
dans lequel la partie verticale (102) comprend au moins un pied (121) agencé pour reposer sur la pièce de transition (161) ;
la structure de support (101, 102) comprend une partie verticale (102) agencée pour s'étendre vers le bas à partir de la partie horizontale (101) de la structure de support (101, 102) jusqu'à un niveau inférieur de l'installation en mer (106) ;
dans lequel la partie verticale (102) est perpendiculaire à la partie horizontale (101) ;
dans lequel l'installation en mer (106) est une éolienne (106) et dans lequel la partie verticale (102) s'étend entre la partie horizontale (101) et une pièce de transition (161) de l'éolienne en mer (106) ; et
dans lequel la partie verticale (102) comprend au moins un pied (121) agencé pour reposer sur la pièce de transition (161).

2. Ensemble de stationnement selon la revendication 1, dans lequel une sangle (130, 131) de l'agencement de couplage (103) comprend un matériau élastique et/ou de l'acier.

3. Ensemble de stationnement selon l'une quelconque des revendications précédentes, dans lequel l'agencement de couplage (103) comprend un certain nombre de points de fixation (141, 142) et dans lequel une sangle (130, 131) est attachée, à chaque extrémité, à un point de fixation (141, 142) de l'agencement de couplage (103).

4. Ensemble de stationnement selon l'une quelconque des revendications précédentes, dans lequel la structure de support (101, 102) comprend au moins une surface de contact (122) agencée pour reposer contre une surface externe de l'élément montant (160).

5. Ensemble de stationnement selon l'une quelconque des revendications précédentes, comprenant une ou plusieurs échelles (150) pour fournir un accès entre le niveau inférieur de l'installation en mer (106) et la plate-forme de travail (107) reposant sur la structure de support (101, 102).

6. Ensemble de stationnement selon l'une quelconque des revendications précédentes, dans lequel la structure de support (101, 102) comprend un agencement de centrage (110, 111) réalisé pour aider à agencer la plate-forme de travail (107) sur l'ensemble de stationnement (100).

7. Ensemble de stationnement selon l'une quelconque des revendications précédentes, dans lequel l'agencement de couplage (103) comprend un moyen de mise en tension (132, 135, 138) réalisé pour serrer une sangle (130, 131) encerclant l'élément montant (160) de l'installation en mer (106).

8. Ensemble de stationnement selon la revendication 7, dans lequel le moyen de mise en tension de l'agencement de couplage (103) comprend l'un quelconque parmi un système de treuil (132) et/ou un tendeur à vis (138) et/ou une poulie (135) et/ou un cliquet.

9. Ensemble de stationnement selon l'une quelconque des revendications précédentes, dans lequel l'agencement de couplage (103) comprend au moins un aimant (133) agencé pour venir en prise avec un élément montant magnétique (160) de l'installation en mer (106).

10. Ensemble de stationnement selon l'une quelconque des revendications précédentes, dans lequel la structure de support (101, 102) comprend un certain nombre de points d'attache (113, 114, 115) agencés pour attacher l'ensemble de stationnement (100) à un appareil de levage et/ou à un câble stabilisateur et/ou à la plate-forme de travail (107).

11. Procédé de stationnement d'une plate-forme de travail (107) d'une installation en mer (106), comprenant les étapes de
- l'arrimage temporaire d'un ensemble de stationnement (100) selon l'une quelconque des revendications 1 à 10 à un élément montant (160) d'une installation en mer (106) ; et
- l'abaissement de la plate-forme de travail (107) jusqu'à la structure de support (101, 102) de l'ensemble de stationnement (100) ; et
- l'arrimage, de manière détachable, de la plate-forme de travail (107) à la structure de support (101, 102) de l'ensemble de stationnement (100).
